# EUROPÄISCHE PATENTSCHRIFT

(11) **EP 0 380 736 B1**
(45) Veröffentlichungstag und Bekanntmachung des Hinweises auf die Patenterteilung: **23.11.1994**
(21) Anmeldenummer: 89109042.5
(22) Anmeldetag: 19.05.1989
(51) Int. Cl.: B60Q 1/44, G01P 15/08

(54) **Anordnung zur Kenntlichmachung des Bremszustandes von Fahrzeugen**
Arrangement to indicate the braking condition of a vehicle
Dispositif pour indiquer l'état de freinage d'un véhicule

(30) Priorität: 02.02.1989 DE 3903047
(43) Veröffentlichungstag der Anmeldung: 08.08.1990
(73) Patentinhaber: Priesemuth, Wolfgang, Dipl.-Ing., 25524 Itzehoe (DE)
(72) Erfinder: Priesemuth, Wolfgang, Dipl.-Ing., 25524 Itzehoe (DE)
(74) Vertreter: Barske, Heiko, Dr. rer. nat.

(56) Entgegenhaltungen:
- DE-A- 2 361 356
- DE-A- 2 507 644
- US-A- 4 231 013
- US-A- 4 694 687

## Beschreibung

Die Erfindung betrifft eine Anordnung zur Kenntlichmachung des Bremszustandes von Fahrzeugen, insbesondere von Kraftfahrzeugen, mittels einer am Fahrzeug angebrachten Bremsleuchteneinrichtung, sowie eine Sensoreinrichtung, die ein Signal und/oder eine Signal folge mit einem Wert entsprechend der momentanen Beschleunigung des Fahrzeugs liefert.

Eine Anordnung dieser Art ist bekannt (DE-A 25 07 644). Bei einer der dort beschriebenen Ausgestaltungen der Anordnung wird als Sensor zur Erfassung der Geschwindigkeitsänderung ein Tachogenerator oder ein Impulsgeber vorgeschlagen, wobei der Tachogenerator mit der Antriebswelle des Geschwindigkeitsanzeigers eines Kraftfahrzeuges gekoppelt ist. Bei einer anderen dort beschriebenen Ausgestaltung der Anordnung wird der Sensor durch einen Dehnmeßstreifen gebildet, der in geeigneter Weise am Bremssystem eines Kraftfahrzeugs montiert sein soll. Bei einer dritten dort beschriebenen Ausgestaltung ist ein mechanischer Sensor beschrieben, der einen sehr komplexen Aufbau aufweist.

Aus der US-A-4 694 687 ist ein kapazitiver Wandler bekannt, der ein in Abhängigkeit der erfaßten Beschleunigung veränderliches Spannungssignal erzeugt, dessen Amplitude und Frequenzcharakteristiken eine Funktion der Richtung und der Größe der auf die Anordnung einwirkenden Beschleunigungskräfte sind.

Es ist jedem Kraftfahrzeugführer bekannt und wird nahezu täglich bei der Teilnahme im Kraftfahrzeugverkehr auf den Straßen von jedem Kraftfahrzeugführer bemerkt, daß die Bremslichter eines vor einem fahrenden Kraftfahrzeuges schon dann zu leuchten beginnen, sobald die Bremse durch den betreffenden Fahrer des Kraftfahrzeuges geringfügig betätigt wird, obwohl faktisch noch gar keine Bremswirkung einsetzt. Das hat seinen Grund darin, daß der in der Regel an geeigneter Stelle mit der Fußbremse des Kraftfahrzeuges gekoppelte Bremslichtschalter in bezug auf seinen Kontaktpunkt so eingestellt ist, daß schon beim geringsten Antippen der Bremspedale bzw. bei Betätigung der Bremse die äußerlich am Fahrzeug sichtbar angebrachte Bremslichteinrichtung aufleuchtet.

Die Folge davon ist sehr oft, daß sich die hinter dem betreffenden Fahrzeug mit ihren Kraftfahrzeugen fahrenden Fahrer erschrecken, wenn aufgrund der allgemeinen Verkehrssituation überhaupt kein Bremsen nötig zu sein scheint. Dieses Erschrecken hat vielfach zur Folge, daß der betreffende Fahrer, der das Aufleuchten der Bremsleuchteneinrichtung des voranfahrenden Kraftfahrzeuges bemerkt, selbst wiederum seine Bremse abrupt und ggf. stärker betätigt, so daß es aus einer an sich völlig unkritischen Fahrsituation des allgemeinen fließenden Verkehrs zu einer Kettenreaktion und damit zu schweren Auffahrunfällen kommen kann, an der eine Vielzahl von Fahrzeugen, die kolonnenartig hintereinander fahren, beteiligt sein können, da sich die Kettenreaktion möglicherweise bis zum letzten Glied der Kolonne fortsetzt.

Eine weitere vielfach im Straßenverkehr zu beobachtende große Gefahrenquelle besteht darin, daß Kraftfahrzeuge, in der Regel Lastkraftfahrzeuge und Busse, über eine sogenannte Motorbremse verfügen, die beträchtliche negative Beschleunigungen auf das Fahrzeug auszuüben imstande ist. Wird mit derartigen Fahrzeugen gezielt mit der Motorbremse gebremst, leuchtet überhaupt keine Bremsleuchteneinrichtung bei Betätigung dieser Art der bekannten Fahrzeugbremsen auf, was vielfach für das dahinterfahrende Kraftfahrzeug mit einem Auffahrunfall verbunden ist, der vermeidbar gewesen wäre, wenn der Bremsvorgang durch das Aufleuchten einer Bremsleuchteneinrichtung angezeigt worden wäre.

Sowohl das vorangehend genannte erste als auch der zweite Problem sind, was die allgemeine Verkehrssicherheit von Kraftfahrzeugen im Straßenverkehr angeht, bezüglich ihren Folgen sehr nachteilig, da auch auf die damit verbundenen Probleme ein erheblicher Anteil der Unfallquote im Sraßenverkehr zurückzuführen ist.

Es ist Aufgabe der vorliegenden Erfindung, eine Anordnung zur Kenntlichmachung des Bremszustandes von Fahrzeugen zu schaffen, so daß die übrigen beteiligten Verkehrsteilnehmer den Grad der Bremsintensität eines Fahrzeuges leicht erkennen können und unter Berücksichtigung dieser gelieferten Information ihre eigenen Handlungen in bezug auf den Fahrzeugverkehr schnell und sicher vornehmen können, wobei die Anordnung geeignet zum Einbau in jedes Fahrzeug sein soll und darüber hinaus kostengünstig bereitstellbar und auch in vorhandene Bremsleuchteneinrichtungen von Fahrzeugen einbaubar im Sinne einer Nachrüstung sein soll.

Gelöst wird die Aufgabe gemäß der Erfindung dadurch, daß die Bremsleuchteneinrichtung bei Betätigung der Fahrzeugbremse über einen damit verbundenen Schalter einschaltbar ist und die Bremsleuchteneinrichtung bei Betätigung einer Fahrzeugbremse in einer dem Wert der momentanen Beschleunigung des Fahrzeugs entsprechenden Intensität elektrisch angesteuert wird, wobei die Beschleunigung durch einen Kondensator als Teil eines Schwingkreises erfaßt wird, dessen Kapazität als Funktion der Beschleunigung des Fahrzeugs veränderbar ist.

Der Vorteil der erfindungsgemäßen Anordnung besteht im wesentlichen darin, daß der Grad der Bremsung des Fahrzeuges an der Bremsleuchteneinrichtung von außen erkennbar ist, beispielsweise dadurch, daß bei stärkerem Bremsen die Bremsleuchteneinrichtung heller, d. h. mit einer größeren Intensität, aufleuchtet als beispielsweise bei einer nur leicht durchgeführten Bremsung. Ein in einem Schwingkreis befindlicher Kondensator kann, zumal es sich um eine verhältnismäßig kostengünstig bereitstellbare elektrische Schaltungskomponente handelt, mit verhältnismäßig hoher Genauigkeit auf eine vorbestimmte Größe eingestellt und damit eine vorbestimmte Resonanzfrequenz eines Schwingkreises eingestellt werden, wobei Veränderungen des Schwingkreises, bedingt durch die Veränderung der Kapazität des Kondensators, eine sehr geeignete Bezugsgröße für die Ursache der Veränderung der Kapazität des Kondensators, nämlich die Beschleunigung des Fahrzeuges ist.

Bei einer sehr einfachen aber wirksamen Ausgestaltung der Anordnung wird der Kondensator des Schwingkreises durch einen Luftkondensator gebildet, der im wesentlichen mit seinen beiden Kondensatorplatten quer zur Längsachse des Fahrzeuges angeordnet ist, wobei die erste Kondensatorplatte als feste, auf einem Gehäuse der Sensoreinrichtung angeordneten Platte ausgebildet ist, während eine zweite Kondensatorplatte als zur ersten im wesentlichen parallel bewegliche Platte ausgebildet ist. Bedingt durch die Massenträgheit der beweglich ausgebildeten Kondensatorplatte wird der Kondensator in seiner Kapazität verändert, wenn das Fahrzeug beim Bremsen negativ beschleunigt wird.

Bei einer anderen vorteilhaften Ausgestaltung der Erfindung, die gerade, was den Einbau in Kraftfahrzeugen angeht, besonders kostengünstig realisierbar ist, steht vom Gehäuse im wesentlichen zentral ein Führungselement in den Innenraum des Gehäuses hinein, das der Parallelführung der zweiten beweglichen Kondensatorplatte bei deren Verschiebung relativ zur festen Kondensatorplatte beim Beschleunigungsvorgang dient. Das Führungselement, das beispielsweise als Stift oder Steg ausgebildet sein kann, ist dabei vorzugsweise integral mit dem Gehäuse ausgebildet, was eine kostengünstige Herstellbarkeit bedeutet. Die Endstellung im Ruhezustand, d. h. beide Kondensatorplatten sind maximal voneinander entfernt, wird vorzugsweise durch Federmittel, beispielsweise in Form einer Druckfeder, bewirkt, die die erste und zweite Kondensatorplatte auf Abstand voneinander halten.

Unabhängig von der Art der Ausbildung des die Beschleunigung des Fahrzeuges unmittelbar erfassenden Elements ist das Element selbst mit einem elektrischen Frequenz-Spannungswandler vorteilhaft verbunden, der in Abhängigkeit der Verstimmung des Schwingkreises eine Spannung mit einem entsprechenden Pegel liefert. Die gelieferte Spannung ist somit ein unmittelbares Maß des Grades der Beschleunigung, die sich auf verhältnismäßig einfache Weise in ein Steuersignal umwandeln läßt, daß die Bremsleuchteneinrichtung mit einer entsprechend dieser Spannung leuchtenden Intensität ansteuern läßt.

Dazu ist vorteilhafterweise der Frequenz-Spannungswandler mit einem spannungsgesteuerten Impulsweitenmodulator verbunden, der ein Signal einer bestimmten Länge entsprechend dem Pegel der vom Frequenz-Spannungswandler gelieferten Spannung erzeugt. Die Impulsweite entsprechend dem primären Spannungspegel schaltet beispielsweise die Bremsleuchteneinrichtung bei einer möglichen Arbeitsweise nur für ein bestimmtes Zeitintervall lang ein und erst dann, wenn wiederum erneut gebremst wird, schaltet entsprechend dem primären Spannungspegel die Bremsleuchteneinrichtung wiederum nur über ein bestimmtes Zeitintervall lang ein usw.

Schließlich wird gemäß einer vorteilhaften Ausgestaltung der Anordnung der Ausgang des Impulsweitenmodulators auf eine Leistungsschaltstufe zum Einschalten der Bremsleuchteneinrichtung gegeben, die entsprechend der erwarteten Leistung, bedingt durch die Art und die Anzahl der Bremsleuchten, geeignet dimensioniert werden kann.

Die Erfindung wird nun unter Bezugnahme auf die nachfolgenden schematischen Zeichnungen anhand eines Ausführungsbeispieles eingehend beschrieben. Diese zeigen:
- Fig. 1: einen Schnitt durch eine Sensoreinrichtung zur Kenntlichmachung der festen und beweglichen Kondensatorplatte und
- Fig. 2: ein Blockschaltbild mit den Grundkomponenten der Anordnung.

Ein wesentlicher Bestandteil der Anordnung 10 ist die Sensoreinrichtung 13 zur Erfassung der Beschleunigung eines hier nicht gesondert dargestellten Fahrzeuges. Wegen ihrer zentralen Funktion wird deshalb die Sensoreinrichtung 13 zuerst beschrieben, wobei nachfolgend dann die Funktion der Anordnung 10 insgesamt näher erläutert wird.

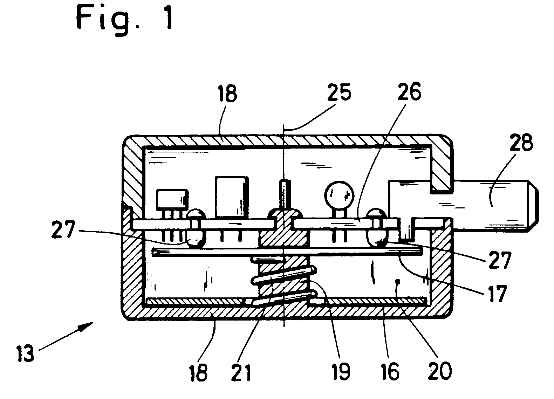

Die Sensoreinrichtung 13 besteht aus einem Gehäuse 18, vgl. Fig. 1, das im vorliegenden Fall aus zwei miteinander geeignet zusammenbaubaren Halbschalen besteht. Auf dem Innenboden des einen Teils des Gehäuses 18 ist eine Kondensatorplatte 16 fest ausgebildet. Vom Boden des gleichen Teils des Gehäuses 18 steht im wesentlichen zentral in den Innenraum 20 des Gehäuses 18 ein Führungselement 19 hinein, daß im vorliegenden Fall, aber nicht auf alle Fälle nötig, einen kreisförmigen Querschnitt aufweist. Längs des Führungselements 19, d. h. in axialer Richtung zu seiner Achse 24, ist eine Kondensatorplatte 17 längsbeweglich angeordnet. Zwischen der festen Kondensatorplatte 16 bzw. dem Boden des diesbezüglichen Teils des Gehäuses 18 und der beweglichen Kondensatorplatte 17 ist ein Federmittel 21 in Form einer Druckfeder angeordnet. Oberhalb der beweglichen Kondensatorplatte 17 ist eine Leiterplatte 26 angeordnet, die sich auf dem Führungselement 19 sowie auf den U-förmigen Seitenteilen bzw. Stegen des Gehäuses 18 abstützt. Die Leiterplatte 26 kann, was hier allerdings nicht gesondert dargestellt ist, mit dem Gehäuse 18 und dem Führungselement 19 durch Klippverbindungen verbunden sein. Von der Leiterplatte 26 in Richtung auf die bewegliche Kondensatorplatte 17 weisend sind Abstandsstifte 27 angeordnet, die in einer Endstellung, vgl. die Darstellung von Fig. 1, die bewegliche Kondensatorplatte 17 festhalten bzw. ihre axiale Beweglichkeit in Richtung der Achse 25 begrenzen.

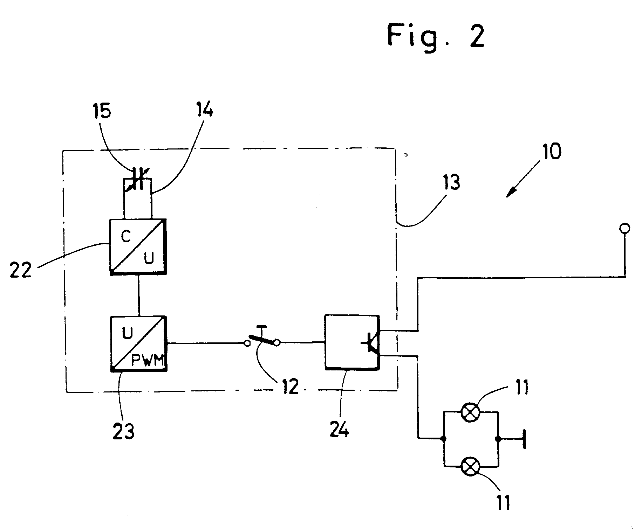

Auf der Leiterplatte 26 sind symbolisch einige elektronische Schaltungskomponenten wie Widerstände und Kondensatoren angeordnet, die symbolisch für die im Zusammenhang mit der Beschreibung von Fig. 2 noch zu erläuternden weiteren Schaltungskomponenten der Anordnung 10 anzusehen sind. Das obere Teil des Gehäuses 18 umgreift die Leiterplatte 26 und verschließt die Sensoreinrichtung 13 absolut staubdicht. Von der Leiterplatte 26 führen elektrische Kontakte 28 nach draußen, um geeignet mit den anderen Komponenten der Anordnung 10 elektrisch verbunden zu werden. In der Fig. 1 ist lediglich symbolisch ein elektrischer Kontakt 28 dargestellt, der gehäuseseitig in die Leiterplatte 26 eingreift und dort mit entsprechenden Leiterbahnen auf geeignete Weise verbunden ist.

Der Kondensator 15, der durch die feste Kondensatorplatte 16 und die bewegliche Kondensatorplatte 17 gebildet wird, bildet einen Teil eines Schwingkreises 14 und stellt eine verstellbare Komponente dieses Schwingkreises dar.

Weiterhin umfaßt die Sensoreinrichtung 13 einen Frequenz-Spannungswandler, einen Impulsweitenmodulator 23 sowie eine Leistungsschaltstufe 24. Der im Blockschaltbild gemäß Fig. 2 lediglich symbolisch dargestellte Schwingkreis 14 ist mit dem Eingang eines Frequenz-Spannungswandlers 22 verbunden. Der einen Spannungspegel entsprechend der Frequenzverstimmung des Schwingkreises 14 am Ausgang liefernde Frequenz-Spannungswandler ist wiederum mit dem Eingang eines Impulsweitenmodulators 23 verbunden. Der Ausgang des Impulsweitenmodulators, an dem ein Impuls mit einer Breite entsprechend der Höhe des an seinem Eingang liegenden Spannungspegels liegt, ist mit dem Eingang einer Leistungsschaltstufe 24 verbunden. Die Leistungsschaltfunktion der Leistungsschaltstufe ist hier symbolisch durch einen Transistor dargestellt, dessen Collektor mit dem positiven Pol einer Versorgungsspannung verbunden ist, während dessen Emitter mit zwei Bremsleuchteneinrichtungen 11 eines Fahrzeuges verbunden ist. Die anderen Pole der Bremsleuchteneinrichtungen 11 sind mit dem negativen Pol einer Versorgungsspannung verbunden. Die emitterseitigen Pole der Bremsleuchteneinrichtung 11 können wiederum mit dem einen Pol eines Schalters 12 verbunden sein, während der andere Pol des Schalters 12 mit dem vorerwähnten positiven Pol der Versorgungsspannung verbunden sein kann. Der Schalter 12 symbolisiert einen Bremslichtschalter, wie er bei normalen Kraftfahrzeugen anzutreffen ist, wobei dieser Bremslichtschalter in der Regel mit der Fußbremse bzw. mit dem Fußbremspedal verbunden ist, so daß dieser bei Betätigung der Fußbremse den Stromkreis zu den Bremsleuchteneinrichtungen 11 schließt.

Es sei im vorliegenden Fall darauf hingewiesen, daß die im Zusammenhang mit der Darstellung von Fig. 1 beschriebene Anordnung des Schalters 12 in der Gesamtanordnung 10 eine Möglichkeit einer Anordnung ist, es ist jedoch auch eine Anordnung der Art denkbar, daß der Schalter 12 direkt im Kollektor-Emitter-Kreis, d. h. in Reihe mit dem Ausgangstransistor der Leistungsschaltstufe 24 angeordnet ist, so daß die Anordnung 10 die Bremseinrichtung 11 nur dann ansteuern kann, wenn zusätzlich der Schalter 12, d. h. der Bremslichtschalter durch Betätigung der Bremse des Fahrzeuges betätigt wird.

Die Sensoreinrichtung 13 ist in einem hier nicht dargestellten Fahrzeug in der Art angeordnet, daß der Kondensator 15 im wesentlichen mit seinen beiden Kondensatorplatten 16, 17 quer zur Längsachse des Fahrzeuges angeordnet ist, wobei die Längsachse des Fahrzeuges im vorliegenden Fall im wesentlichen identisch mit der Achse 25 der Sensoreinrichtung 13 ausgerichtet ist. Beim Bremsen eines Fahrzeuges wird somit die bewegliche Kondensatorplatte 17 aufgrund ihrer Massenträgheit eine Bewegung relativ zur festen Kondensatorplatte 16 vollführen und zwar im wesentlichen in axialer Richtung zur Achse 25. Die Verringerung des Abstandes der beiden Kondensatorplatten 16, 17 bei der negativen Beschleunigung eines Fahrzeuges (Bremsen) bewirkt eine Veränderung der Kapazität des Kondensators 15 und auf bekannte Weise eine Verstimmung des Schwingkreises 14, in dem der Kondensator 15 ein bzw. das zeitbestimmende Glied der Schwingungsfrequenz des Schwingkreises 14 ist. Der mit dem Schwingkreis 14 verbundene Frequenz-Spannungswandler 22 wandelt eine Frequenz in eine Spannung mit einem Pegel entsprechend der Frequenz des Schwingkreises 14 um. Unterschiedliche Frequenzen des Schwingkreises 14 bewirken unterschiedliche Spannungspegel am Ausgang des Frequenz-Spannungswandlers 22.

Die unterschiedlich möglichen Spannungen des Spannungs-Frequenzwandlers 22 werden im Impulsweitenmodulator 23 in entsprechend zeitlich unterschiedlich lange Impulse, die Digitalimpulse sein können, umgewandelt. Entsprechend der Länge der Impulse am Ausgang des Impulsweitenmodulators 23 wird die Leistungsschaltstufe 24 angesteuert und diese schaltet entsprechend der Länge des Impulses in einem bestimmten Zeitintervall die Bremsleuchteneinrichtung 11 an und wieder aus.

Der Impulsweitenmodulator 23 kann derart ausgestaltet sein, daß fortwährend ein Taktimpuls auf die Leistungsschaltstufe 24 gegeben wird. Wird der positive Anteil des am Ausgang des Impulsweitenmodulators 23 liegenden Signals im Vergleich zu seinem Nullanteil länger, was durch das Bremsen des Fahrzeugs und die damit einhergehende Verstimmung des Schwingkreises 14 erfolgt, wird der zeitliche Anteil der Durchsteuerung des Ausgangstransitors der Leistungsschaltstufe 24 vergrößert, so daß die Bremsleuchteneinrichtung 11 verstärkt getaktet angesteuert wird, d. h. bei negativer Beschleunigung bzw. beim Bremsen des Fahrzeuges zu leuchten anfängt. Je stärker die negative Beschleunigung auf dem Kondensator 15 einwirkt und eine stärkere Verstimmung des Schwingkreises 14 veranlaßt, desto größer ist der positive Anteil der Impulse am Ausgang des Impulsweitenmodulators 23, so daß demzufolge der zeitliche Anteil der Steuerimpulse für den Ausgangstransistor der Leistungsschaltstufe 24 vergrößert wird, mit der Folge, daß die Bremsleuchteneinrichtung 11 pro Impuls länger durchgeschaltet eingeschaltet bleibt und demzufolge die Bremsleuchteneinrichtungen 11 stärker leuchten.

Es sei noch darauf hingewiesen, daß die im Zusammenhang mit der Darstellung von Fig. 2 beschriebene Art der Ansteuerung der Bremsleuchteneinrichtung 11 in Abhängigkeit von der Intensität des Bremsens nur eine mögliche technische Realisierung darstellt. Eine andere, hier nicht gesondert dargestellte Realisierungsmöglichkeit besteht in der Verwendung linearer analoger Schaltungskomponenten, die eine lineare Ansteuerung des Ausgangstransistors zur Steuerung der Bremsleuchteneinrichtung 11 bewirken, so daß ungetaktet die Bremsleuchteneinrichtungen 11 unmittelbar in Abhängigkeit der Verstimmung des Schwingkreises 14 angesteuert werden und entsprechend der Intensität des Bremsens des Fahrzeuges bzw. entsprechend der negativen Beschleunigung intensiv leuchten.

### Bezugszeichenliste

- 10: Anordnung
- 11: Bremsleuchteneinrichtung
- 12: Schalter
- 13: Sensoreinrichtung
- 14: Schwingkreis
- 15: Kondensator
- 16: Kondensatorplatte (fest)
- 17: - " - (beweglich)
- 18: Gehäuse
- 19: Führungselement
- 20: Innenraum
- 21: Federmittel
- 22: Frequenz-Spannungswandler
- 23: Impulsweitenmodulator
- 24: Leistungsschaltstufe
- 25: Achse
- 26: Leiterplatte
- 27: Abstandsstifte
- 28: elektrischer Kontakt

## Patentansprüche

1. Anordnung zur Kenntlichmachung des Bremszustandes von Fahrzeugen, insbesondere von Kraftfahrzeugen, mittels einer am Fahrzeug angebrachten Bremsleuchteneinrichtung (11) sowie einer Sensoreinrichtung (13), die ein Signal und/oder eine Signalfolge mit einem Wert entsprechend der momentanen Beschleunigung des Fahrzeugs liefert, dadurch gekennzeichnet, daß die Bremsleuchteneinrichtung (11) bei Betätigung der Fahrzeugbremse über einen damit verbundenen Schalter einschaltbar ist und die Bremsleuchteneinrichtung (11) bei Betätigung einer Fahrzeugbremse in einer dem Wert der momentanen Beschleunigung des Fahrzeugs entsprechenden Intensität elektrisch angesteuert wird, wobei die Beschleunigung durch einen Kondensator (15) als Teil eines Schwingkreises (14) erfaßt wird, dessen Kapazität als Funktion der Beschleunigung des Fahrzeugs veränderbar ist.

2. Anordnung nach Anspruch 1, dadurch gekennzeichnet, daß der Kondensator (15) durch einen Luftkondensator gebildet wird, der im wesentlichen mit seinen beiden Kondensatorplatten (16, 17) quer zur Längsachse des Fahrzeuges angeordnet ist.

3. Anordnung nach einem oder beiden der Ansprüche 1 oder 2, dadurch gekennzeichnet, daß eine erste Kondensatorplatte (16) als feste, auf einem Gehäuse (18) der Sensoreinrichtung angeordnete Platte ausgebildet ist, während eine zweite Kondensatorplatte (17) als zur ersten im wesentlichen parallel bewegliche Platte ausgebildet ist.

4. Anordnung nach Anspruch 3, dadurch gekennzeichnet, daß vom Gehäuse (18) im wesentlichen zentral ein Führungselement (19) in den Innenraum (20) des Gehäuses (18) hineinsteht, das der Parallelführung der zweiten beweglichen Kondensatorplatte (17) dient.

5. Anordnung nach einem oder mehreren der Ansprüche 1 bis 4, dadurch gekennzeichnet, daß die erste und zweite Kondensatorplatte (16, 17) durch Federmittel (21) auf Abstand voneinander gehalten werden.

6. Anordnung nach einem oder mehreren der Ansprüche 1 bis 5, dadurch gekennzeichnet, daß der Schwingkreis (14) mit einem Frequenz-Spannungswandler (22) verbunden ist, der in Abhängigkeit der Verstimmung des Schwingkreises (14) eine Spannung mit einem entsprechenden Pegel liefert.

7. Anordnung nach Anspruch 6, dadurch gekennzeichnet, daß der Frequenz-Spannungswandler (22) mit einem spannungsgesteuerten Impulsweitenmodulator (23) verbunden ist, der ein Signal einer bestimmten Länge entsprechend dem Pegel der vom Frequenz-Spannungswandler (22) gelieferten Spannung erzeugt.

8. Anordnung nach Anspruch 7, dadurch gekennzeichnet, daß der Ausgang des Impulsweitenmodulators (23) auf eine Leistungsschaltstufe (24) zum Einschalten der Bremsleuchteneinrichtung (11) gegeben wird.

## Claims

1. An arrangement for displaying the braked condition of vehicles, particularly motor vehicles, by means of a brake light means (11) mounted on the vehicle and a sensor means (13) which delivers a signal and/or a sequence of signals with a value corresponding to the instantaneous acceleration of the vehicle, characterised in that the brake light means (11), when the vehicle brake is actuated, can be switched on via a switch connected with it and the brake light means (11), when a vehicle brake is actuated, is electrically actuated to an intensity corresponding to the level of the acceleration of the vehicle at that point in time, whereby the acceleration is ascertained by a capacitor (15) as part of an oscillating circuit (14) the capacity of which is variable as a function of the acceleration of the vehicle.

2. An arrangement according to claim 1, characterised in that the capacitor (15) consists of an air capacitor which is disposed essentially so that its two capacitor plates (16, 17) are cross-wise to the longitudinal axis of the vehicle.

3. An arrangement according to one or both of claims 1 or 2, characterised in that a first capacitor plate (16) is constructed as a fixed plate disposed on a housing (18_) of the sensor means while the second capacitor plate (17) is constructed as a plate which is adapted substantially for parallel movement in relation to the first plate.

4. An arrangement according to claim 3, characterised in that from the housing (18) a guide element (19) projects substantially centrally into the interior (20) of the housing (18) which serves for parallel guidance of the second movable capacitor plate (17).

5. An arrangement according to one of claims 1 to 4, characterised in that the first and second capacitor plates (16, 17) are maintained at a distance from each other by spring means (21).

6. An arrangement according to one or more of claims 1 to 5, characterised in that the oscillating circuit (14) is connected to a frequency voltage converter (22) which delivers a voltage at a corresponding level as a function of the amount by which the oscillating circuit (14) is detuned.

7. An arrangement according to claim 6, characterised in that the frequency voltage converter (22)is connected to a voltage controlled pulse width modulator (23) which generates a signal of a specific length corresponding to the level of the voltage delivered by the frequency voltage converter (22).

8. An arrangement according to claim 7, characterised in that the output of the pulse width modulator (23) is delivered to a power switching stage (24) in order to switch on the brake light means (11).

## Revendications

1. Dispositif pour indiquer l'état de freinage de véhicules, en particulier de véhicules automobiles, par l'intermédiaire d'un èquipement lumineux de freinage (11) rapporté sur le véhicule ainsi que d'un capteur (13) délivrant un signal et/ou une suite de signaux d'une valeur correspondant à l'accélération instantanée du véhicule, caractérisé en ce que l'équipement lumineux de freinage (11) peut être connecté par l'intermédiaire d'un interrupteur qui lui est relié, lors de l'actionnement des freins du véhicule, et en ce que ledit équipement (11) peut être amorcé électriquement, lors de l'actionnement des freins du véhicule, selon une intensité correspondant à la valeur de l'accélération instantanée du véhicule, l'accélération étant détectée par l'intermédiaire d'un condensateur (15) faisant partie d'un circuit oscillant (14) dont la capacité est variable en fonction de l'accélération du véhicule.

2. Dispositif selon la revendication 1, caractérisé en ce que le condensateur (15) est formé par un condensateur à air qui, avec ses deux plaques (16,17), est disposé sensiblement perpendiculairement à l'axe longitudinal du véhicule.

3. Dispositif selon l'une ou deux des revendications 1 ou 2, caractérisé en ce qu'une première plaque (16) du condensateur est une plaque fixe disposée sur une enceinte (18) du capteur, tandis qu'une seconde plaque (17) du condensateur est une plaque mobile sensiblement parallèle à la première.

4. Dispositif selon la revendication 3, caractérisé en ce qu'un élément de guidage (19) fait saillie sensiblement au centre de l'enceinte (18) dans l'espace intérieur (20) de ladite enceinte, cet élément assurant le guidage parallèle de la seconde plaque (17) mobile du condensateur.

5. Dispositif selon l'une ou plusieurs des revendications 1 à 4 , caractérisé en ce que les première et seconde plaques (16,17) sont maintenues distantes l'une de l'autre par des moyens élastiques (21).

6. Dispositif selon l'une ou plusieurs des revendications 1 à 5, caractérisé en ce que le circuit oscillant (14) est relié à un convertisseur fréquence-tension (22) qui, selon le décalage du circuit oscillant (14), délivre une tension d'un niveau correspondant.

7. Dispositif selon la revendication 6, caractérisé en ce que le convertisseur fréquence-tension (22) est relié à un modulateur à impulsions larges (23) à tension asservie qui produit un signal d'une longueur déterminée correspondant au niveau de la tension délivrée par le convertisseur fréquence-tension (22).

8. Dispositif selon la revendication 7, caractérisé en ce que la sortie du modulateur à impulsions larges (23) communique avec un plot interrupteur de puissance (24), pour la connexion de l'équipement lumineux de freinage (11).
